# EUROPEAN PATENT APPLICATION

(11) **EP 4 439 499 A1**
(43) Date of publication of application: **02.10.2024**
(21) Application number: 23213265.4
(22) Date of filing: 30.11.2023
(51) Int. Cl.: G07C 9/00, H04B 10/116

(54) **DIGITAL KEY GENERATION SYSTEM AND METHOD, VEHICLE UNLOCKING METHOD AND APPARATUS, AND DEVICE**

(30) Priority: 27.03.2023 CN 202310309608
(71) Applicant: Chongqing Changan Automobile Co., Ltd., Chongqing 400023 (CN)
(72) Inventor: He, Jiang, Chongqing 400023 (CN)
(74) Representative: Patentanwaltskanzlei Matschnig & Forsthuber OG

(57) **Abstract**

Disclosed are a digital key generation system and method, a vehicle unlocking method and apparatus, and a device, relating to the technical field of vehicle control. The system includes a mobile terminal and a head unit terminal, where the mobile terminal is configured to generate a key and a decryption secret key on the basis of a received digital key generation instruction, perform color coding on the key and the decryption secret key to obtain color light data, and send the color light data to the head unit terminal; and the head unit terminal is configured to receive the color light data, decode the color light data to obtain the key and the decryption secret key, store the key and the decryption secret key, and generate successful storage information, so that a user confirms to generate a digital key of a vehicle on the basis of the successful storage information. Therefore, the problems of low security of the digital key of the vehicle, high manufacturing cost of the digital key, and the like are solved, the convenience and security of use of the digital key of the vehicle are improved, and the manufacturing cost is reduced.

## Description

### Field of the Invention

The present application relates to the technical field of vehicle control, and in particular, to a digital key generation system and method, a vehicle unlocking method and apparatus, and a device.

### Background of the Invention

In recent years, with the popularization and development of automobiles, people have increasingly high requirements for intelligence and comfort level of the automobiles. Accordingly, there are more and more automobile key unlocking methods. In order to meet various requirements for the automobiles, an automobile Passive Entry Passive Start (PEPS) system has emerged.

In related technology, the automobile PEPS system is generally implemented using Bluetooth Low Energy (BLE). The BLE is a personal local area network technology designed and sold by the Bluetooth Technology Alliance. Ultra Wide Band (UWB) technology is a wireless carrier communication technology that utilizes nanosecond non-sinusoidal wave narrow pulses to transmit data. In addition, there are traditional mechanical keys and digital keys based on fingerprint recognition and face recognition.

However, a BLE digital key uses Bluetooth wireless transmission, and data packets are easily intercepted and cracked by network attacks. The UWB uses a fixed-frequency wireless channel for wireless transmission. Like the BLE digital key, data packets are easily intercepted and cracked, and the UWB is not widely used in mobile phones and has high costs. The traditional mechanical keys have the disadvantages of inconvenient carrying and easy loss. In the fingerprint unlocking, a fingerprint is directly used as a secret key, which is easily replicated and is easily attacked by preimages. The face unlocking is safe, but it uses a camera for image acquisition, which is also costly. How to improve the security of the digital keys of the automobiles and reduce the manufacturing cost of the digital keys of the automobiles needs to be solved urgently.

### Summary of the Invention

The present application provides a digital key generation system and method, a vehicle unlocking method and apparatus, and a device, so as to solve the problems of low security of a digital key of a vehicle, high manufacturing cost of the digital key, and the like, so that the convenience and security of use of the digital key of the vehicle are improved, and the manufacturing cost is reduced.

An embodiment of a first aspect of the present application provides a digital key generation system of a vehicle, including:
a mobile terminal and a head unit terminal, where
the mobile terminal is configured to generate a key and a decryption secret key on the basis of a received digital key generation instruction, perform color coding on the key and the decryption secret key to obtain color light data, and send the color light data to the head unit terminal; and
the head unit terminal is configured to receive the color light data, decode the color light data to obtain the key and the decryption secret key, store the key and the decryption secret key, and generate successful storage information, so that a user confirms to generate a digital key of the vehicle on the basis of the successful storage information.

According to the above technical measures, the present application further improves the security of the digital key by encrypting and decrypting data. The original vehicle key unlocking system is improved, so that the implementation principle is simple, and the manufacturing cost is reduced.

Further, the mobile terminal includes:
a data generation component, configured to generate data to be coded, where the data to be coded includes the key and the decryption secret key;
a color coding component, configured to perform color coding on the key and the decryption secret key to obtain the color light data; and
an output component, configured to send the color light data to the head unit terminal.

According to the above technical measures, the color light data obtained after data is processed by the color coding component has an encryption function itself, so that the original data can be obtained only after the color light data is decoded by a color decoding component with a certain rule. Thus, the security of use of the digital key of the vehicle is improved.

Further, the head unit terminal includes:
a data receiving component, configured to receive the color light data sent by a sending component;
a color decoding component, configured to decode the color light data to obtain the key and the decryption secret key; and
a storage component, configured to: store the key and the decryption secret key and generate the successful storage information.

According to the above technical measures, by taking physical color light as a transmission medium for data transmission, instead of using a network for data transmission, the present application can prevent network intrusions and intercept attacks and prevent data packets from being cracked, namely, prevent data packets from being cracked and attacked by hackers using network retransmission or another mechanism, so that the security of use of the digital key of the vehicle is further improved.

Further, the data receiving component is a color sensor.

According to the above technical measures, by adding a color sensor on the basis of the original vehicle key unlocking system, the present application can achieve control operations such as unlocking and starting on the vehicle by software in conjunction with device applications of the mobile terminal and applications of the head unit terminal, so that the implementation principle is simple, and the manufacturing cost is also reduced.

An embodiment of a second aspect of the present application provides a digital key generation method of a vehicle, using the digital key generation system of the vehicle according to the embodiment of the first aspect, where the method is applied to the mobile terminal, and the method includes the following steps:
receiving the digital key generation instruction, and generating the key and the decryption secret key on the basis of the digital key generation instruction;
performing color coding on the key and the decryption secret key to obtain the color light data, sending the color light data to the head unit terminal, and receiving a confirm-to-generate instruction sent by the user on the basis of the successful storage information generated by the head unit terminal; and
generating a digital key of the vehicle according to the confirm-to-generate instruction.

Further, the performing color coding on the key and the decryption secret key to obtain the color light data includes:
determining a color coding source of the key and the decryption secret key; and
performing the color coding on the key and the decryption secret key by using a preset sampling cycle on the basis of the color coding source to obtain the color light data.

Further, the successful storage information is obtained by decoding, by the head unit terminal, the color light data and storing the key and the decryption secret key obtained by the decoding.

A third aspect of the present application provides a vehicle unlocking method, using the digital key generation system of the vehicle according to the embodiment of the first aspect, where the method is applied to the head unit terminal, and the method includes the following steps:
receiving the color light data, where the color light data includes an unlocking instruction or an unlocking and starting instruction;
decoding the unlocking instruction or the unlocking and starting instruction to obtain an encrypted key, and decrypting the encrypted key using the decryption secret key, and determining whether a decrypted key is consistent with a key currently stored in the head unit terminal; and
if the decrypted key is consistent with the key currently stored in the head unit terminal, unlocking the vehicle on the basis of the unlocking instruction or unlocking and starting the vehicle on the basis of the unlocking and starting instruction.

Further, the unlocking instruction or the unlocking and starting instruction is obtained by performing the color coding by the encrypted key.

An embodiment of a fourth aspect of the present application provides a vehicle unlocking apparatus, using the digital key generation system of the vehicle according to the embodiment of the first aspect, where the apparatus is applied to the head unit terminal, and the apparatus includes:
a receiving module, configured to receive the color light data, where the color light data includes an unlocking instruction or an unlocking and starting instruction;
a processing module, configured to: decode the unlocking instruction or the unlocking and starting instruction to obtain an encrypted key, and decrypt the encrypted key using the decryption secret key, and determine whether a decrypted key is consistent with a key currently stored in the head unit terminal; and
a starting module, configured to: if the decrypted key is consistent with the key currently stored in the head unit terminal, unlock the vehicle on the basis of the unlocking instruction or unlock and start the vehicle on the basis of the unlocking and starting instruction.

Further, the unlocking instruction or the unlocking and starting instruction is obtained by performing the color coding by the encrypted key.

An embodiment of a fifth aspect of the present application provides an electronic device, including: a memory, a processor, and a computer program stored on the memory and executable on the processor, where the processor executes the program to implement the digital key generation method of the vehicle according to the embodiment of the second aspect or the vehicle unlocking method according to the embodiment of the third aspect.

An embodiment of a sixth aspect of the present application provides a computer-readable storage medium, storing a computer program, where the program, when executed by a processor, is used for implementing the digital key generation method of the vehicle according to the embodiment of the second aspect or the vehicle unlocking method according to the embodiment of the third aspect.

Therefore, the present application uses a device (including but not limited to a mobile phone) of the mobile terminal to transmit the instruction and the data, and the head unit terminal receives the data sent by the device of the mobile terminal through the color sensor, so that the problems of low security of the digital key of the vehicle and high manufacturing cost of the digital key. This not only improves the convenience and security of use of vehicle keys, but also reduces the manufacturing cost.

The additional aspects and advantages of the present application will be partially provided in the following descriptions, some of which will become apparent from the following descriptions, or learned through the practice of the present application.

### Brief Description of the Drawings

The above and/or additional aspects and advantages of the present application will become apparent and easy to understand from the descriptions of the embodiments in conjunction with the accompanying drawings below:
FIG. 1 is a schematic block diagram of a digital key generation system of a vehicle according to an embodiment of the present application;
FIG. 2 is a schematic block diagram of a data transmission system based on color recognition according to an embodiment of the present application;
FIG. 3 is a flowchart of a digital key generation method of a vehicle according to an embodiment of the present application;
FIG. 4 is a flowchart of digital key generation based on color recognition according to an embodiment of the present application;
FIG. 5 is a schematic diagram of a color coding scheme and timing according to an embodiment of the present application;
FIG. 6 is a flowchart of a vehicle unlocking method according to an embodiment of the present application;
FIG. 7 is a flowchart of digital key unlocking based on color recognition according to an embodiment of the present application;
FIG. 8 is a schematic block diagram of a vehicle unlocking apparatus according to an embodiment of the present application; and
FIG. 9 is a schematic structural diagram of an electronic device according to an embodiment of the present application.

Numerals in the drawings: 10: digital key generation system of vehicle; 100: mobile terminal; 200: head unit terminal; 20: vehicle unlocking apparatus; 300: receiving module; 400: processing module; 500: starting module; 901: memory; 902: processor; and 903: communication interface.

### Detailed Description of the Embodiments

The embodiments of the present application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present application, and should not be construed as a limitation on the present application.

A digital key generation system and method, a vehicle unlocking method and apparatus, and a device according to the embodiments of the present application will be described in detail below with reference to the accompanying drawings. In view of the problems mentioned in the background section of low security of a digital key of a vehicle, high manufacturing cost of the digital key, and the like, the present application provides a digital key generation system of a vehicle. A key and a decryption secret key can be generated through a mobile terminal on the basis of a received digital key generation instruction; color coding is performed on the key and the decryption secret key; and obtained color light data is sent to a head unit terminal. The color light data can be received by the head unit terminal and is decoded to obtain the key and the decryption secret key; and after the key and the decryption secret key are stored, a user confirms to generate a digital key of the vehicle on the basis of generated successful storage information. Therefore, the problems of low security of the digital key of the vehicle, high manufacturing cost of the digital key, and the like are solved, the convenience and security of use of the digital key of the vehicle are improved, and the manufacturing cost is reduced.

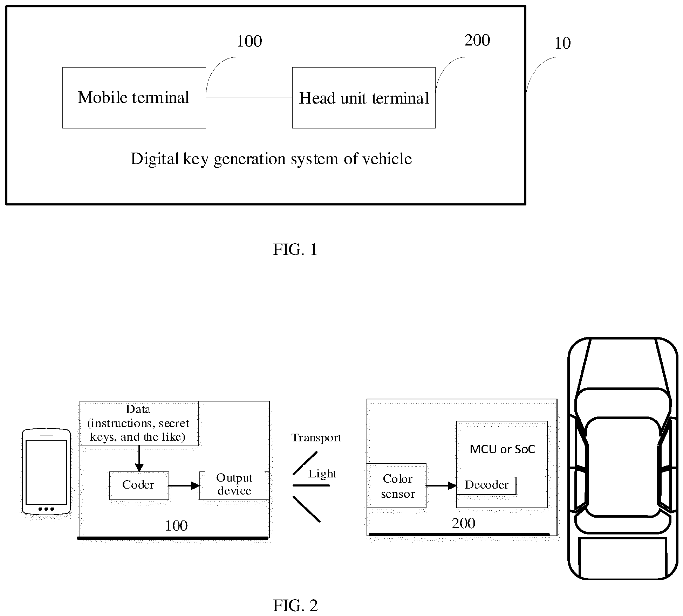

Specifically, FIG. 1 is a schematic block diagram of a digital key generation system of a vehicle according to an embodiment of the present application.

As shown in FIG. 1, the digital key generation system 10 of the vehicle includes: a mobile terminal 100 and a head unit terminal 200.

The mobile terminal 100 is configured to generate a key and a decryption secret key on the basis of a received digital key generation instruction, perform color coding on the key and the decryption secret key to obtain color light data, and send the color light data to the head unit terminal 200; and the head unit terminal 200 is configured to receive the color light data, decode the color light data to obtain the key and the decryption secret key, store the key and the decryption secret key, and generate successful storage information, so that a user confirms to generate a digital key of the vehicle on the basis of the successful storage information.

It can be understood that as shown in FIG. 2, the mobile terminal 100 generates the color light data of the key and the decryption secret key through application software, and controls an output device (including but not limited to a display screen and a Red Green Blue (RGB) lamp) to output the coded color light data. A color sensor of the head unit terminal 200 acquires coded data sent by the device of the mobile terminal, and sends the data to a processor (including but not limited to a Microcontroller Unit (MCU) and a System on Chip (SoC)) of the head unit terminal 200. The processor of the head unit terminal 200 decodes the coded data according to its own application and then correspondingly processes the decoded data, so that the user confirms to generate the digital key of the vehicle according to the stored information.

It should be noted that the mobile terminal 100 can generate a digital key and a secret key (including but not limited to a general secret key, a symmetric encryption secret key, and an asymmetric encryption secret key), and can serve as a digital key to control or unlock a vehicle.

Further, in some embodiments, the mobile terminal 100 includes: a data generation component, a color coding component, and an output component. The data generation component is configured to generate data to be coded, where the data to be coded includes the key and the decryption secret key; the color coding component is configured to perform color coding on the key and the decryption secret key to obtain the color light data; and the output component is configured to send the color light data to the head unit terminal. The head unit terminal 200 includes: a data receiving component, the color decoding component, and the storage component. Among them, the data receiving component is configured to receive the color light data sent by a sending component; the color decoding component is configured to decode the color light data to obtain the key and the decryption secret key; and the storage component is configured to: store the key and the decryption secret key and generate the successful storage information.

In some embodiments, the data receiving component is a color sensor.

Specifically, as shown in FIG. 2, data that needs to be sent to the head unit terminal 200 is coded by an application program controlling the data color coding component (namely, a data color coder). The color coding component can be implemented using software or hardware. After the coding is completed, the color light data obtained from the coded data through screen color light is output through the output component (namely, an output device), where the output component can be implemented using a display screen of the mobile terminal 100, such as the mobile phone. The data receiving component (namely, the color sensor) of the head unit terminal 200 decodes the data through the color decoding component (namely, a decoder) after receiving the color light data, so as to obtain original data, namely, the key and the decryption secret key, and stores the key and the decryption secret key into the storage component to generate the successful storage information.

It can be understood that the digital key generation system 10 of the vehicle according to the embodiments of the present application has certain security. The color light data obtained after the data is processed by the color coding component has its own encryption function, and the original data can be obtained only after the color light data is decoded by the color decoding component with a certain rule. In addition, the embodiments of the present application do not involve network connections and network communications in the unlocking process, but use physical color light as a transmission medium for data transmission, which can prevent network intrusions and intercept attacks and prevent data packets from being cracked, namely, prevent the data packets from being cracked and attacked by hackers using network retransmission and another mechanism. In terms of hardware, by only adding a data receiving component (namely, the color sensor) on the basis of an original vehicle key unlocking system, the embodiments of the present application can achieve the above effects by software in conjunction with device applications of the mobile terminal 100 and applications of the head unit terminal 200. This reduces the manufacturing cost and has a simple implementation principle.

According to the digital key generation system of the vehicle provided by the embodiments of the present application, the mobile terminal can generate the key and the decryption key on the basis of the received digital key generation instruction, perform the color coding on the key and the decryption key, and send the obtained color light data to the head unit terminal. The head unit terminal can receive the color light data and decode the color light data to obtain the key and the decryption key. After the key and the decryption key is stored, the user confirms to generate the digital key of the vehicle on the basis of the generated successful storage information. Therefore, the problems of low security of the digital key of the vehicle, high manufacturing cost of the digital key, and the like are solved, the convenience and security of use of the digital key of the vehicle are improved, and the manufacturing cost is reduced.

A digital key generation method of a vehicle according to an embodiment of the present application will be then described with reference to the accompanying drawings.

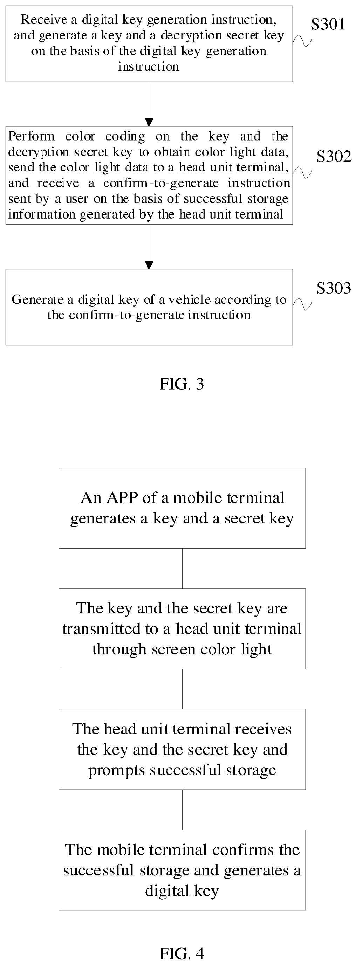

FIG. 3 is a flowchart of a digital key generation method of a vehicle according to an embodiment of the present application. The digital key generation method of the vehicle adopts the digital key generation system of the vehicle as shown in the embodiment of FIG. 1, where the method is applied to the mobile terminal.

As shown in FIG. 3 and FIG. 4, the digital key generation method of the vehicle includes the following steps:
In step S301, the digital key generation instruction is received, and the key and the decryption secret key are generated on the basis of the digital key generation instruction.

It can be understood that the embodiments of the present application can start a digital key creation and generation process through the mobile terminal, start the process on the basis of the digital key generation instruction, generate a digital key, an encryption secret key, and the decryption secret key, and store the digital key and encryption secret key in a storage medium of a terminal device.

In step S302, color coding is performed on the key and the decryption secret key to obtain the color light data, the color light data is sent to the head unit terminal, and a confirm-to-generate instruction sent by the user on the basis of the successful storage information generated by the head unit terminal is received.

It can be understood that the key and the decryption secret key can generate the color light data through the data color coding component, and the color light data can be transmitted and output to the head unit terminal through a screen. The head unit terminal can receive the key and the decryption secret key sent from the mobile terminal through the data receiving component, obtain the original secret key through the color decoding component, and store the key and the decryption secret key into the storage component, and prompt the user that the secret key is stored successfully.

In step S303, a digital key of the vehicle is generated according to the confirm-to-generate instruction.

It can be understood that after the user confirms that the secret key is stored successfully, the user can confirm the successful creation of the secret key on the mobile terminal. Then, the mobile terminal generates the digital key and stores it on the mobile terminal (or, the digital key can be stored in a cloud for backup, to provide a key sharing function and an account key retrieval function), thus achieving control operations such as unlocking and starting on the vehicle.

Further, color coding is performed on the key and the decryption secret key to obtain the color light data, which includes:
color coding source of the key and the decryption secret key is determined; and
the color coding is performed on the key and the decryption secret key by using a preset sampling cycle on the basis of the color coding source to obtain the color light data.

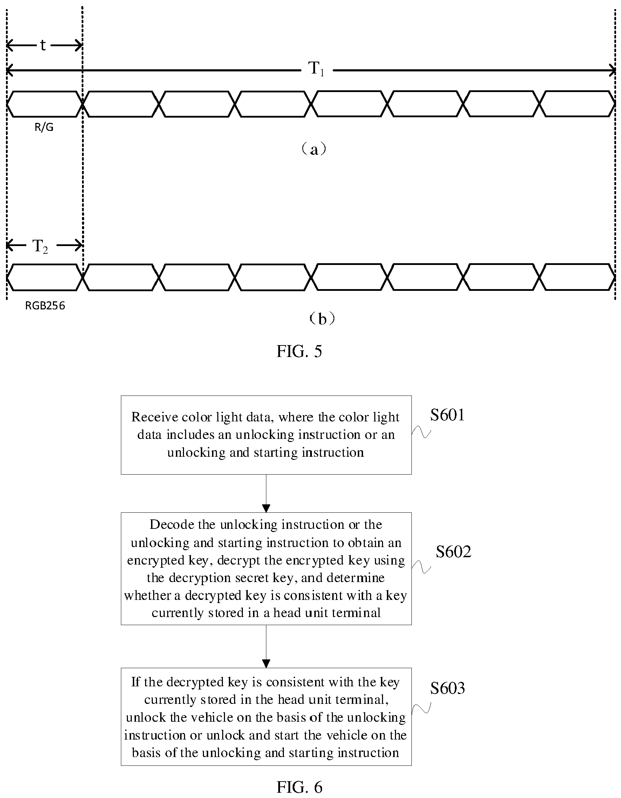

Specifically, as shown in FIG. 5, FIG. 5 is a schematic diagram of a color coding scheme and timing according to an embodiment of the present application. Since different color sensors can recognize different color ranges, different color coding and decoding schemes need to be selected for different color sensors.

For example, a color sensor that can only recognize RGB colors and a sensor that can recognize colors on a CIE 1931xy color table are taken as an example:
(1) When an RGB color sensor is used, only three colors, namely, red, green, and blue, can be recognized. To facilitate coding, only two of the colors are selected as coding sources. In the embodiments of the present application, the red color and the green color are selected for research, where the red color and the green color are used to represent 0 and 1, respectively. It should be noted that all three pieces of RGB data can be used through other coding schemes. No specific limitations will be made here.
   As shown in FIG. 5(a), t is a single sampling cycle. Color light falling in the single sampling cycle can be recognized to be 0 or 1 according to its color. Thus, 1Bit can be obtained within the single sampling cycle. After eight sampling cycles (time T1), 1Byte data can be obtained, so that the original data can be converted into the color light data, and the color light data is sent through the output component according to certain timing. Similarly, the head unit terminal receives the complete color light data through the data receiving component or in a manner of defining data at a start bit, and performs reverse decoding to obtain the uncoded original data.
(2) When the sensor that can recognize the color data in the CIE 1931xy color table, the sensor can output color data in the CIE 1931xy color table due to its high-precision color recognition capability. For ease of coding, the embodiments of the present application divide a color range that the sensor can recognize into 256 segments. It should be noted that the scheme here is not unique, and no specific limitations will be made here.

As shown in FIG. 5(b), t represents a single sampling cycle, and there are 256 possibilities for color light falling within the single sampling cycle, representing numbers from 1 to 256, namely, 1Byte data. By coding in this way, 1Byte data can be transmitted within a single sampling cycle (time T2), so that the transmission efficiency is eight times the transmission efficiency of the RGB color coding, which greatly improves the transmission efficiency. The decoding process is done in the same way. To avoid redundancy, details will not be described here.

Further, in some embodiments, the successful storage information is obtained by decoding, by the head unit terminal, the color light data and storing the key and the decryption secret key obtained by the decoding.

It can be understood that the successful storage information includes the key and the decryption secret obtained by decoding the color light data.

According to the digital key generation method of the vehicle provided by the embodiments of the present application, the key and the decryption secret key are generated on the basis of the received digital key generation instruction, and the color coding is performed on the key and decryption secret key; the obtained color light data is sent to the head unit terminal; the confirm-to-generate instruction sent by a user on the basis of successful storage information generated by the head unit terminal is received; and the digital key of the vehicle is generated according to the confirm-to-generate instruction. Therefore, the problems of low security of the digital key of the vehicle, high manufacturing cost of the digital key, and the like are solved, the convenience and security of use of the digital key of the vehicle are improved, and the manufacturing cost is reduced.

In addition, the embodiments of the present application further provide a vehicle unlocking method. FIG. 6 is a flowchart of a vehicle unlocking method according to an embodiment of the present application. The vehicle unlocking method adopts the digital key generation system of the vehicle as shown in the embodiment of FIG. 1, where the method is applied to the head unit terminal.

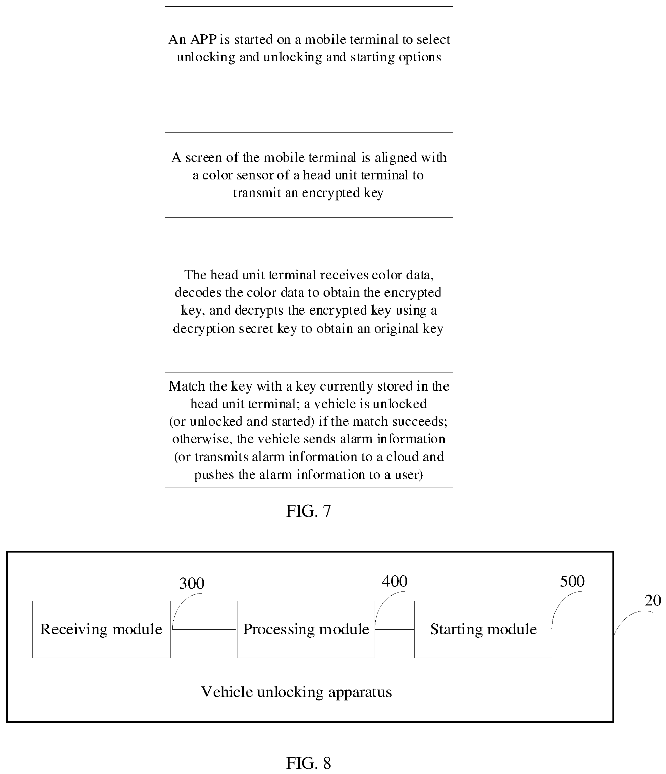

As shown in FIG. 6 and FIG. 7, the vehicle unlocking method includes the following steps:
In step S601, the color light data is received, where the color light data includes an unlocking instruction or an unlocking and starting instruction.

Specifically, the user can start an APP through the mobile terminal and select different unlocking operations by selecting the unlocking instruction or the unlocking and starting instruction in the APP.

It should be noted that the unlocking instruction only supports unlocking the vehicle, and the unlocking and starting instruction supports unlocking and starting the vehicle.

Further, in some embodiments, the unlocking instruction or the unlocking and starting instruction is obtained by performing the color coding by an encrypted key.

Specifically, after selecting a function instruction, the user aligns the screen of the mobile terminal with the color sensor covering the head unit terminal within specified time (the color sensor can be mounted on a door handle of the vehicle or at another position). The APP encrypts a key currently stored in the head unit terminal with an encryption secret key and then codes the encrypted key through the color coding component to obtain the unlocking instruction or the unlocking and starting instruction, and the unlocking instruction or the unlocking and starting instruction is output and displayed through a display screen of a terminal device.

In step S602, the unlocking instruction or the unlocking and starting instruction is decoded to obtain an encrypted key, the encrypted key is decoded using the decryption secret key, and whether a decrypted key is consistent with a key currently stored in the head unit terminal is determined.

Specifically, after receiving an interruption signal of external stimulus, the color sensor starts to acquire data and decodes the received data through the color decoding component to obtain the encrypted key. The original key is obtained through the decryption secret. Matching is performed on the original key and the key currently stored in the head unit terminal to determine whether the decrypted key is matched with the key currently stored in the head unit terminal.

In step S603, if the decrypted key is consistent with the key currently stored in the head unit terminal, the vehicle is unlocked on the basis of the unlocking instruction or the vehicle is unlocked and started on the basis of the unlocking and starting instruction.

Specifically, if the decrypted key is matched with the key currently stored in the head unit terminal, the vehicle will be unlocked on the basis of the unlocking instruction or a corresponding unlocking action will be performed on the basis of the unlocking and starting instruction. Otherwise, the vehicle can send alarm information or upload alarm information to a cloud and push the alarm information to the user.

According to the vehicle unlocking method provided by the embodiments of the present application, the unlocking instruction or the unlocking and starting instruction in the received color light data is decoded to obtain the encrypted key; the encrypted key is decoded using the decryption secret key, and whether the decrypted key is consistent with the key currently stored in the head unit terminal is determined; and if the decrypted key is consistent with the key currently stored in the head unit terminal, the vehicle is unlocked on the basis of the unlocking instruction or the vehicle is unlocked and started on the basis of the unlocking and starting instruction. Therefore, the problems of low security of the digital key of the vehicle, high manufacturing cost of the digital key, and the like are solved, the convenience and security of use of the digital key of the vehicle are improved, and the manufacturing cost is reduced.

Furthermore, as shown in FIG. 8, FIG. 8 is a schematic block diagram of a vehicle unlocking apparatus according to an embodiment of the present application The vehicle unlocking apparatus adopts the digital key generation system of the vehicle as shown in the embodiment of FIG. 1, where the apparatus is applied to the head unit terminal.

As shown in FIG. 8, the vehicle unlocking apparatus 20 includes: a receiving module 300, a processing module 400, and a starting module 500.

The receiving module 300 is configured to receive the color light data, where the color light data includes an unlocking instruction or an unlocking and starting instruction;
the processing module 400 is configured to: decode the unlocking instruction or the unlocking and starting instruction to obtain an encrypted key, and decrypt the encrypted key using the decryption secret key, and determine whether a decrypted key is consistent with a key currently stored in the head unit terminal; and
the starting module 500 is configured to: if the decrypted key is consistent with the key currently stored in the head unit terminal, unlock the vehicle on the basis of the unlocking instruction or unlock and start the vehicle on the basis of the unlocking and starting instruction.

Further, in some embodiments, the unlocking instruction or the unlocking and starting instruction is obtained by performing the color coding by an encrypted key.

It should be noted that the foregoing explanation of the vehicle unlocking method embodiment is also applicable to the vehicle unlocking apparatus of this embodiment, so details will be omitted here.

According to the vehicle unlocking apparatus provided by the embodiments of the present application, the unlocking instruction or the unlocking and starting instruction in the received color light data is decoded to obtain the encrypted key; the encrypted key is decoded using the decryption secret key, and whether the decrypted key is consistent with the key currently stored in the head unit terminal is determined; and if the decrypted key is consistent with the key currently stored in the head unit terminal, the vehicle is unlocked on the basis of the unlocking instruction or the vehicle is unlocked and started on the basis of the unlocking and starting instruction. Therefore, the problems of low security of the digital key of the vehicle, high manufacturing cost of the digital key, and the like are solved, the convenience and security of use of the digital key of the vehicle are improved, and the manufacturing cost is reduced.

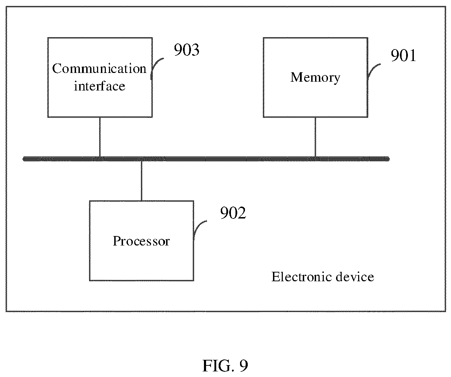

FIG. 9 is a schematic structural diagram of an electronic device according to an embodiment of the present application. The electronic device can include:
a memory 901, a processor 902, and a computer program stored on the memory 901 and executable on the processor 902.

The processor 902, when executing the program, performs the digital key generation method or the vehicle unlocking method provided in the above embodiments.

Further, the electronic device further includes:
a communication interface 903, configured to achieve communication between the memory 901 and the processor 902.

The memory 901 is configured to store the computer program executed on the processor 902.

The memory 901 may include a high-speed Random Access Memory (RAM), and may further include a non-volatile memory, for example, at least one disk memory.

If the memory 901, the processor 902, and the communication interface 903 are independently implemented, the communication interface 903, the memory 901, and the processor 902 can be connected to and communicate with each other through a bus. The bus may be an Industry Standard Architecture (ISA) bus, a Peripheral Component Interconnect (PCI) bus, an Extended Industry Standard Architecture (EISA) bus, or the like. The bus may be divided into an address bus, a data bus, a control bus, and the like. For ease of representation, only one thick line is used in FIG. 9, but it does not mean that there is only one bus or one type of bus.

Optionally, in terms of specific implementation, if the memory 901, the processor 902, and the communication interface 903 are integrated on a chip, the memory 901, the processor 902, and the communication interface 903 can communicate with each other through internal interfaces.

The processor 902 can be a central processing unit (CPU) or an application-specific integrated circuit (ASIC), or is configured to be one or more integrated circuits that implement the embodiments of the present application.

The embodiments of the present application further provide a computer-readable storage medium, storing a computer program. The program, when executed by a processor, implements the digital key generation method of the vehicle or the vehicle unlocking method as described above.

In the description of this specification, the description referring to the terms "one embodiment", "some embodiments", "an example", "specific examples", "some examples", or the like means that specific features, structures, materials or characteristics described in connection with the embodiments or examples are included in at least one embodiment or example of the present disclosure. In this specification, the schematic representations of the above terms are not necessarily intended to refer to the same embodiment or example. Furthermore, the specific features, structures, materials or characteristics described may be combined in any suitable manner in any one or N embodiments or examples. In addition, those skilled in the art may combine the different embodiments or examples described in this specification, as well as the features of different embodiments or examples, without mutual contradictions.

In addition, the terms "first" and "second" are used for descriptive purposes only and are not to be construed as indicating or implying relative importance or to implicitly indicate the number of technical features indicated. From this, features defined as "first" and "second" may explicitly or implicitly include at least one feature. In the description of the present application, "N" means at least two, for example, two and three, unless explicitly specified otherwise.

Any process or method description in the flowchart or otherwise described herein can be understood as a module, fragment, or part representing a code that includes one or more executable instructions for implementing steps customizing logic functions or processes, and the scopes of the preferred implementations of the present application include other implementations. The functions can be executed in a manner other than an order shown or discussed, including: a substantially simultaneous manner or a reverse order according to the functions involved. This shall be understood by those skilled in the art to which the embodiments of the present application belong.

It should be understood that the various parts of the present application can be implemented using hardware, software, firmware, or a combination of the above. In the above implementations, N steps or methods can be implemented using software or firmware stored in the memory and executed by an appropriate instruction execution system. For example, if it is implemented using hardware, as in another implementation, the steps or methods can be implemented using any of the following well-known technologies in the art or a combination of the technologies: a discrete logic circuit with a logic gate circuit for achieving a logic function on a data signal, an application-specific integrated circuit with an appropriate combined logic gate circuit, a programmable gate array, a field programmable gate array, and the like.

A person of ordinary skill in the art can understand that all or some of the steps in the methods of the foregoing embodiments may be completed by instructing related hardware through programs. The programs may be stored in a computer-readable storage medium. The programs, when executed, include one or a combination of the steps of the method embodiments.

The embodiments of the present application have been shown and described above, but it can be understood that the above embodiments are exemplary and cannot be understood as limitations on the present application. A person of ordinary skill in the art may make changes, modifications, substitutions, and transformations to the above embodiments within the scope of the present application.

## Claims

1. A digital key generation system of a vehicle, comprising:
a mobile terminal and a head unit terminal, wherein
the mobile terminal is configured to generate a key and a decryption secret key on the basis of a received digital key generation instruction, perform color coding on the key and the decryption secret key to obtain color light data, and send the color light data to the head unit terminal; and
the head unit terminal is configured to receive the color light data, decode the color light data to obtain the key and the decryption secret key, store the key and the decryption secret key, and generate successful storage information, so that a user confirms to generate a digital key of the vehicle on the basis of the successful storage information.

2. The digital key generation system of the vehicle according to claim 1, wherein the mobile terminal comprises:
a data generation component, configured to generate data to be coded, wherein the data to be coded comprises the key and the decryption secret key;
a color coding component, configured to perform color coding on the key and the decryption secret key to obtain the color light data; and
an output component, configured to send the color light data to the head unit terminal.

3. The digital key generation system of the vehicle according to claim 2, wherein the head unit terminal comprises:
a data receiving component, configured to receive the color light data sent by a sending component;
a color decoding component, configured to decode the color light data to obtain the key and the decryption secret key; and
a storage component, configured to: store the key and the decryption secret key and generate the successful storage information.

4. The digital key generation system of the vehicle according to claim 3, wherein the data receiving component is a color sensor.

5. A digital key generation method of a vehicle, using the digital key generation system of the vehicle according to any one of claims 1 to 4, wherein the method is applied to the mobile terminal, and the method comprises the following steps:
receiving the digital key generation instruction, and generating the key and the decryption secret key on the basis of the digital key generation instruction;
performing color coding on the key and the decryption secret key to obtain color light data, sending the color light data to the head unit terminal, and receiving a confirm-to-generate instruction sent by the user on the basis of the successful storage information generated by the head unit terminal; and
generating a digital key of the vehicle according to the confirm-to-generate instruction.

6. The digital key generation method of the vehicle according to claim 5, wherein the performing color coding on the key and the decryption secret key to obtain the color light data comprises:
determining a color coding source of the key and the decryption secret key; and
performing the color coding on the key and the decryption secret key by using a preset sampling cycle on the basis of the color coding source to obtain the color light data.

7. The digital key generation method of the vehicle according to claim 5, wherein the successful storage information is obtained by decoding, by the head unit terminal, the color light data and storing the key and the decryption secret key obtained by the decoding.

8. A vehicle unlocking method, using the digital key generation system of the vehicle according to any one of claims 1 to 4, wherein the method is applied to the head unit terminal, and the method comprises the following steps:
receiving color light data, wherein the color light data comprises an unlocking instruction or an unlocking and starting instruction;
decoding the unlocking instruction or the unlocking and starting instruction to obtain an encrypted key, and decrypting the encrypted key using the decryption secret key, and determining whether a decrypted key is consistent with a key currently stored in the head unit terminal; and
if the decrypted key is consistent with the key currently stored in the head unit terminal, unlocking the vehicle on the basis of the unlocking instruction or unlocking and starting the vehicle on the basis of the unlocking and starting instruction.

9. The vehicle unlocking method according to claim 8, wherein the unlocking instruction or the unlocking and starting instruction is obtained by performing the color coding by the encrypted key.

10. A vehicle unlocking apparatus, using the digital key generation system of the vehicle according to any one of claims 1 to 4, wherein the apparatus is applied to the head unit terminal, and the apparatus comprises:
a receiving module, configured to receive color light data, wherein the color light data comprises an unlocking instruction or an unlocking and starting instruction;
a processing module, configured to: decode the unlocking instruction or the unlocking and starting instruction to obtain an encrypted key, and decrypt the encrypted key using the decryption secret key, and determine whether a decrypted key is consistent with a key currently stored in the head unit terminal; and
a starting module, configured to: if the decrypted key is consistent with the key currently stored in the head unit terminal, unlock the vehicle on the basis of the unlocking instruction or unlock and start the vehicle on the basis of the unlocking and starting instruction.

11. The vehicle unlocking apparatus according to claim 10, wherein the unlocking instruction or the unlocking and starting instruction is obtained by performing the color coding by the encrypted key.

12. An electronic device, comprising: a memory, a processor, and a computer program stored on the memory and executable on the processor, wherein the processor executes the program to implement the digital key generation method of the vehicle according to any one of claims 5 to 7 or the vehicle unlocking method according to any one of claims 8 to 9.

13. A computer-readable storage medium, storing a computer program, wherein the program, when executed by a processor, is used for implementing the digital key generation method of the vehicle according to any one of claims 5 to 7 or the vehicle unlocking method according to any one of claims 8 to 9.
